# EUROPÄISCHE PATENTANMELDUNG

(11) **EP 1 383 061 A2**
(43) Veröffentlichungstag der Anmeldung: **21.01.2004**
(21) Anmeldenummer: 03015300.1
(22) Anmeldetag: 07.07.2003
(51) Int. Cl.: G06F 17/60

(54) **Verfahren und Konfigurator zur Erstellung eines Anlagenkonzepts aus einer Anzahl von Anlagenkomponenten**

(30) Priorität: 18.07.2002 DE 10232659
(71) Anmelder: SIEMENS AKTIENGESELLSCHAFT, 80333 München (DE)
(72) Erfinder: Söllner, Siegfried, 91054 Erlangen (DE)

(57) **Zusammenfassung**

Ein erfindungsgemäßes Verfahren wird bereit gestellt durch ein EDV-basiertes Verfahren zur Erstellung eines Anlagenkonzepts (20) aus einer Anzahl von Anlagenkomponenten (22,23,24), umfassend folgende Schritte:
a) Eine gewünschte Spezifikation einer technischen Anlage wird mittels Spezifikationsdaten (5) erfasst,
b) aus einem gespeicherten Vorrat (12) an Anlagenkomponententypen (14) werden anhand der Spezifikationsdaten (5) mittels einer Klassifikationseinrichtung (10) diejenigen Anlagenkomponententypen (14) ausgewählt, welche zur Erfüllung der gewünschten Spezifikation der technischen Anlage benötigt werden,
c) die ausgewählten Anlagenkomponententypen (14) werden mittels der Klassifikationseinrichtung (10) derart zu einer Anlagenkonfiguration (16) verknüpft, so dass die Anlagenkonfiguration (16) die gewünschte Spezifikation der technischen Anlage prinzipiell zumindest im Wesentlichen erfüllt, und
d) aus der Anlagenkonfiguration (16) wird mittels einer Selektionseinrichtung (18) ein Anlagenkonzept (20) erstellt, wobei die Anlagenkomponententypen (14) durch Anlagenkomponenten (22,23,24) ersetzt werden, so dass das Anlagenkonzept (20) eine konkret ausführbare technische Anlage beschreibt.

Ein erfindungsgemäßer Konfigurator (1) dient zur Durchführung obigen Verfahrens.

## Beschreibung

Die Erfindung betrifft ein Verfahren sowie einen Konfigurator zur Erstellung eines Anlagenkonzepts aus einer Anzahl von Anlagenkomponenten, wobei das Anlagenkonzept zur konkreten Realisierung einer technischen Anlage dient.

Beim Erstellung eines Angebots für eine technische Anlage sowie bei deren detaillierter Projektierung bei einer späteren Abwicklung muss bisher meist rein manuell anhand von beispielsweise als Lastenheft vorliegenden Spezifikationsdaten der technischen Anlage ein Vorschlag für eine Anlagenkonfiguration und ein entsprechendes Preisangebot ausgearbeitet werden, wobei die vorgeschlagene Anlagenkonfiguration die Anforderungen des Lastenhefts möglichst weitgehend prinzipiell erfüllen soll. Die konkrete Realisierung der technischen Anlage umfasst dann die Auswahl und Bestellung von konkret beziehbaren Anlagenkomponenten, welche entsprechend der ausgearbeiteten Anlagenkonfiguration verschaltet werden. Als Anlagenkomponenten werden in diesem Zusammenhang sowohl Hardwarekomponenten, beispielsweise Computer, Drucker, Automatisierungsgeräte etc., als auch Softwarekomponenten, beispielsweise Betriebssysteme, Anwenderprogramme, Datenbanken, Datenerfassungsprogramme, Regelungsprogramme etc., verstanden.

Um den Arbeitsaufwand insbesondere bei der Erstellung eines Angebots für eine technische Anlage zu reduzieren, wird dabei in der heutigen Praxis oftmals auf bereits früher erarbeitete Angebote bzw. bereits früher detailliert projektierte Anlagen zurück gegriffen und diese Daten manuell für ein aktuell zu erarbeitendes Angebot oder eine aktuell durchzuführende detaillierte Projektierung aktualisiert, ergänzt und überarbeitet.

Das Ergebnis ist dabei qualitativ nur so gut, wie die früher erstellte Vorlage es ist; insbesondere ist es dabei sehr schwierig, in der Zwischenzeit erfolgte Neuerungen bzgl. der eingesetzten Technik, der Preisbildung u.s.w. einzuarbeiten, so dass Fehler praktisch nicht vermieden werden können.

Bisher wurden die oben genannten Tätigkeiten bei der Erstellung von Angeboten für eine technische Anlage sowie deren detaillierter Projektierung in der Abwicklungsphase im Wesentlichen manuell und daher zeitaufwändig und fehleranfällig durchgeführt.

Der Erfindung liegt daher die Aufgabe zu Grunde, ein verbessertes Verfahren zur Erstellung eines Anlagenkonzepts aus einer Anzahl von Anlagenkomponenten sowie einen entsprechenden Konfigurator zur Durchführung des Verfahrens anzugeben.

Bezüglich des Verfahrens wird die Aufgabe erfindungsgemäß gelöst durch ein EDV-basiertes Verfahren zur Erstellung eines Anlagenkonzepts aus einer Anzahl von Anlagenkomponenten, mit folgenden Schritten:
1. Eine gewünschte Spezifikation einer technischen Anlage wird mittels Spezifikationsdaten erfasst.
2. Aus einem gespeicherten Vorrat an Anlagenkomponententypen werden anhand der Spezifikationsdaten mittels einer Klassifikationseinrichtung diejenigen Anlagenkomponententypen ausgewählt, welche zur Erfüllung der gewünschten Spezifikation der technischen Anlage benötigt werden.
3. Die ausgewählten Anlagenkomponententypen werden mittels der Klassifikationseinrichtung derart zu einer Anlagenkonfiguration verknüpft, so dass die Anlagenkonfiguration die gewünschte Spezifikation der technischen Anlage prinzipiell zumindest im Wesentlichen erfüllt, und
4. aus der Anlagenkonfiguration wird mittels einer Selektionseinrichtung ein Anlagenkonzept erstellt, wobei die Anlagenkomponententypen durch Anlagenkomponenten ersetzt werden, so dass das Anlagenkonzept eine konkret ausführbare technische Anlage beschreibt.

Mittels des erfindungsgemäßen Verfahrens wird ein durchgängiges Verfahren bereit gestellt, bei dem automatisch aus den beispielsweise mittels eines elektronischen Formulars erfassten Spezifikationsdaten eine prinzipielle Konfiguration der technischen Anlage erstellt wird. Dabei werden die zur Erfüllung der geforderten Anlagenspezifikation benötigten Funktionen zunächst "nur" prinzipiell bereit gestellt, indem Anlagenkomponententypen, beispielsweise vorgefertigte, gespeicherte, reale Anlagenkomponenten repräsentierende Symbole, aus einem Vorrat ausgewählt und anschließend, z.B. grafisch, verknüpft werden, so dass die so entstandene prinzipielle Anlagenkonfiguration geeignet ist, die geforderte Anlagenspezifikation zu erfüllen. In diesem Schritt handelt es sich bei den Anlagenkomponententypen nicht um konkret beziehbare, beispielsweise mittels Bestelldaten identifizierbare, Anlagenkomponenten.
Ein Anlagenkomponententyp kann beispielsweise ein Rechner sein, wobei noch nicht festgelegt ist, welcher konkrete Rechner (also z.B. mit welchem Prozessor, mit welchen internen Laufwerken, mit welchen Schnittstellen, mit welcher Software etc.) die dem Anlagenkomponententyp zugedachte Funktion später bei einer konkreten Realisierung der technischen Anlage ausführen soll.
Ein weiteres Beispiel für einen Anlagenkomponententyp ist ein Regelungsprogramm, beispielsweise zur Regelung der Leistung einer Turbine zur Erzeugung elektrischer Energie.
Anhand der Spezifikationsdaten ergibt sich beispielsweise, dass ein derartiges Regelungsprogramm benötigt wird; deshalb wird mittels der Klassifikationseinrichtung der Komponententyp "Regelungsprogramm zur Turbinen-Leistungsregelung" ausgewählt und mit einem z.B. vorher ausgewählten Komponententyp "Rechner" verknüpft, auf welchem das Regelungsprogramm ausgeführt werden soll. Dabei ist zum Zeitpunkt der Auswahl des Anlagenkomponententyps "Regelungsprogramm zur Turbinen-Leistungsregelung" noch nicht festgelegt, welcher konkrete Algorithmus zur Regelung herangezogen wird, in welcher Programmiersprache das Regelungsprogramm erstellt wird, unter welchem Betriebssystem das Regelungsprogramm ablaufen wird etc.

In einem nächsten Schritt wird dann schließlich mittels der Selektionseinrichtung ein technisches konkret ausführbares Anlagenkonzept ermittelt, indem die - zunächst allgemeine Funktionen repräsentierenden - Anlagenkomponententypen durch Anlagenkomponenten ersetzt werden, welche bevorzugt konkret beziehbar und/oder direkt herstellbar und/oder mittels Bestell- oder Bezugsdaten unmittelbar identifizierbar sind. Die Anlagenkomponenten umfassen also im Zusammenhang mit der Erfindung konkrete Verkörperungen der entsprechenden allgemeinen Anlagenkomponententypen.

Beim Ersetzen der Anlagenkomponententypen durch Anlagenkomponenten kann es vorkommen, dass zu einem Anlagenkomponententyp mehrere konkrete Anlagenkomponenten in Frage kommen, welche jeweils zur Ausführung der dem Anlagenkomponententyp zugedachten Funktion in Frage kommen.
In einem derartigen Fall ist es möglich, dass die Selektionseinrichtung den entsprechenden Anlagenkomponententyp durch alle in Frage kommenden Anlagenkomponenten ersetzt und die letztendliche Auswahl einer der geeigneten Anlagenkomponenten aus der Gruppe der in Frage kommenden Anlagenkomponenten einem Benutzer des Verfahrens überlässt.
Alternativ kann die Selektionseinheit im Falle mehrerer in Frage kommenden Anlagenkomponenten daraus automatisch eine bevorzugte Anlagenkomponente auswählen, beispielsweise eine vorab festgelegte Standard-Anlagenkpomponente.

Eine Ausführungsform des erfindungsgemäßen Verfahrens kann folgende Schritte umfassen:
- über ein elektronisches Formular werden die Spezifikationsdaten für eine technische Anlage eingegeben, beispielsweise für ein leittechnisches System:
   - Anzahl der lokalen Steuertafeln
   - Funktionen der lokalen Steuertafeln (z.B. Handbedienung, lokale Visualisierung, Synchronisierung, Stromversorgung, Redundanz...)
   - Leistung der zu steuernden Maschinen
   - Anzahl der Ein-/Ausgänge der lokalen Steuertafeln (u.U. indirekt aus Leistung der Maschinen ableitbar)
   - Art der Kommunikation (Bus: einfach/redundant; Funk; Einzelverdrahtung...) mit den Zentralrechnern
   - Anzahl der Zentralrechner, Redundanz
   - Funktionen der Zentralrechner
   - sonstige Funktionen des Leitsystems
- die Klassifikationseinrichtung ermittelt aus den Spezifikationsdaten beispielsweise mit den Methoden der Mustererkennung und/oder Fuzzy-Logic und/oder Neuronale Netzwerke eine Anlagenkonfiguration der gewünschten technischen Anlage, indem sie Anlagenkomponententypen aus einem gespeicherten Vorrat auswählt, als Symbole grafisch darstellt und zu einer prinzipiell funktionsfähigen technischen Anlage grafisch verknüpft.
- Die Selektionseinheit ersetzt die Anlagenkomponententypen durch konkrete, real bezieh- und/oder unmittelbar herstellbare Anlagenkomponenten, welche beispielsweise zusammen in einer Datenbank, beispielsweise einem elektronischen Katalog, gespeichert sind; so sind z.B. ein Angebot mit Preisen, eine konkret ausführbare Anlagenkonfiguration sowie die benötigten Softwarekomponenten in einfacher Weise automatisch bereit gestellt.

Bezüglich des Konfigurators wird die Aufgabe erfindungsgemäß gelöst durch einen Konfigurator zur Erstellung eines Anlagenkonzepts aus einer Anzahl von Anlagenkomponenten, umfassend folgende Konfiguratorkomponenten:
- Mittel zur elektronischen Erfassung von Spezifikationsdaten einer technischen Anlage, wobei die Spezifikationsdaten eine gewünschte Spezifikation einer technischen Anlage beschreiben,
- eine Klassifikationseinrichtung, mittels welcher aus einem gespeicherten Vorrat an Anlagenkomponententypen anhand der Spezifikationsdaten diejenigen Anlagenkomponententypen auswählbar sind, welche zur Erfüllung der gewünschten Spezifikation der technischen Anlage benötigt werden und mittels welcher die ausgewählten Anlagenkomponententypen derart zu einer Anlagenkonfiguration verknüpfbar sind, so dass die Anlagenkonfiguration die gewünschte Spezifikation der technischen Anlage prinzipiell zumindest im Wesentlichen erfüllt, und
- eine Selektionseinrichtung, mittels welcher aus der Anlagenkonfiguration ein Anlagenkonzept erstellbar ist, wobei die Anlagenkomponententypen durch Anlagenkomponenten ersetzt werden, so dass das Anlagenkonzept eine konkret ausführbare technische Anlage beschreibt.

Die im Zusammenhang mit dem erfindungsgemäßen Verfahren angeführten Erläuterungen, Ausführungen und Vorzüge sind analog auf einen erfindungsgemäßen Konfigurator übertragbar und werden daher an dieser Stelle nicht wiederholt.

Im Folgenden wird ein Ausführungsbeispiel der Erfindung näher dargestellt.

Es zeigt:
FIG einen erfindungsgemäßen Konfigurator.

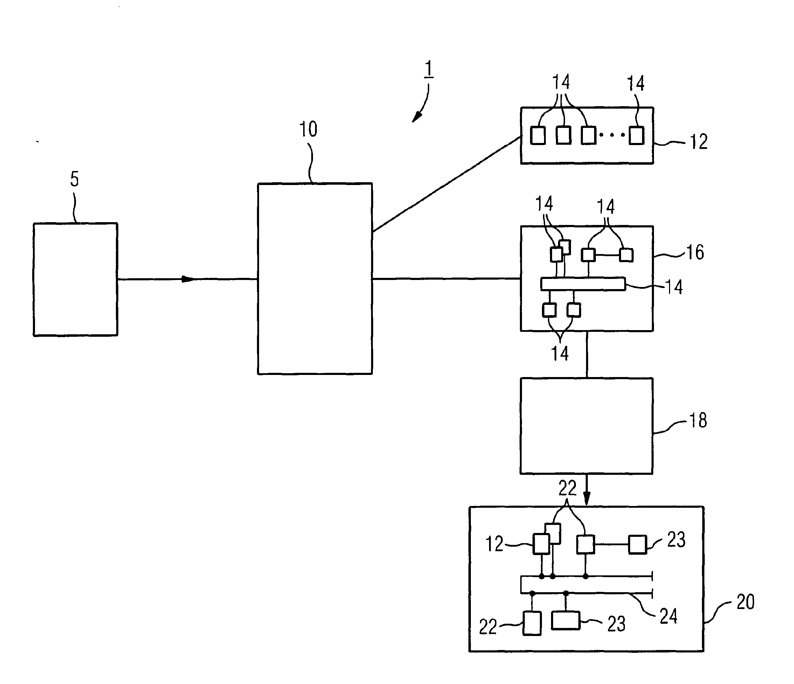

Die Figur zeigt einen erfindungsgemäßen Konfigurator 1, welcher als wesentliche Bestandteile eine Klassifikationseinrichtung 10, sowie eine Selektionseinrichtung 18 umfasst.

Mittels des erfindungsgemäßen Konfigurators 1 soll aus Spezifikationsdaten 5, welche eine gewünschte Spezifikation einer technischen Anlage, also beispielsweise eine gewünschte Funktionalität von Anlagenteilen, umfassen, ein Anlagenkonzept 20 der technischen Anlage erstellbar sein, wobei das Anlagenkonzept 20 eine konkret ausführbare technische Anlage beschreibt, so dass insbesondere, soweit möglich, keine Notwendigkeit mehr besteht, die vom Anlagenkonzept 20 umfassten Informationen weiter detaillieren oder interpretieren zu müssen, um beispielsweise zur Realisierung der technischen Anlage benötigte Anlagenkomponenten 22, 23, 24 identifizieren und beziehen bzw. herstellen zu können.

Die Spezifikationsdaten 5 werden beispielsweise mittels eines elektronischen Formulars erfasst. Die Spezifikationsdaten 5 können umfassen, dass es sich bei der technischen Anlage um ein Leitsystem für ein Dampfkraftwerk handelt, das Dampfkraftwerk vier Dampfturbinen mit einer Leistung von jeweils 200 mW umfasst, dass zur Steuerung der Dampfturbinen jeweils eine lokale Steuertafel vorgesehen sein soll, dass jede dieser Steuertafeln eine Handbedienung, eine Vorrichtung zum schnellen Anfahren, eine Notabschaltung und eine Visualisierung beinhalten soll, dass zur Versorgung der Kraftwerkskomponenten eine weitere Steuertafel zur Steuerung des Eigenbedarfs vorgesehen sein soll und dass ein zentrales Rechnersystem vorgesehen sein soll, welches beispielsweise redundant auszulegen ist und über die Möglichkeit zur Kopplung an weitere Systeme verfügen soll. Außer oder anstelle dieser beispielhaft genannten Spezifikationsdaten 5 sind beliebige andere Spezifikationsdaten denkbar, welche im Zusammenhang mit der gewünschten Spezifikation einer technischen Anlage stehen.

Die Spezifikationsdaten 5, welche in der Regel eine Anzahl an Einzeldaten umfassen, werden von der Klassifikationseinrichtung 10 dahingehend verarbeitet, dass aus der in der Anzahl von den Spezifikationsdaten 5 umfassten Information auf Anlagenkomponententypen 14, welche in einem Vorrat 12 gespeichert sind, geschlossen werden kann, welche zur Erfüllung der gewünschten Spezifikation der technischen Anlage benötigt werden, um beispielsweise die von der gewünschten Spezifikation umfassten Funktionen der technischen Anlage ausführen zu können.

Bei den Anlagenkomponententypen 14 handelt es sich insbesondere nicht um endgültig spezifizierte, beispielsweise mittels Bestelldaten beziehbare Anlagenkomponenten, wie ein bestimmter Computer mit bestimmter Ausstattung oder ein bestimmtes Datenübertragungskabel mit bestimmten Eigenschaften. Die Anlagenkomponententypen 14 sollen vielmehr im Rahmen einer mittels der Klassifikationseinrichtung 10 festgelegten Anlagenkonfiguration 16 gewissermaßen als "funktionelle Platzhalter" für in einem nächsten Schritt noch detailliert zu spezifizierende Anlagenkomponenten 22,23,24 dienen, so dass die mittels der Spezifikationsdaten 5 erfasste gewünschte Spezifikation der technischen Anlage prinzipiell erfüllt ist, ohne dass die Anlagenkonfiguration 16 bereits konkrete Anlagenkomponenten 22,23,24 zur Realisierung der Anlagenkomponententypen 14 umfasst.

Neben der Auswahl der Anlagenkomponententypen 14 aus dem Vorrat 12 kommt der Klassifikationseinrichtung 10 weiterhin die Aufgabe zu, die ausgewählten Anlagenkomponententypen 14, beispielsweise in Form einer grafischen Darstellung, derart zu verknüpfen, so dass das aus den ausgewählten Anlagenkomponententypen 14 sowie deren Verknüpfungen untereinander die daraus entstandene Anlagenkonfiguration 16 geeignet ist, prinzipiell die gewünschte Spezifikation der technischen Anlage zu erfüllen.

Die Klassifikationseinrichtung 10 kann beispielsweise durch ein neuronales Netz realisiert sein, welches als Eingabedaten die Spezifikationsdaten 5 erhält und als Ausgabedaten die Anlagenkomponententypen sowie deren Verknüpfungen liefert.

Dazu kann das neuronale Netz vorab mit Testdaten trainiert sein, so dass während des Betriebs des Konfigurators aus den Spezifikationsdaten 5 entsprechende Ausgabedaten interpoliert werden.

Um aus der Anlagenkonfiguration 16 ein Anlagenkonzept 20 ableiten zu können, welches eine konkret ausführbare technische Anlage beschreibt, ist die Selektionseinrichtung 18 vorgesehen.

Eine wesentliche Aufgabe der Selektionseinrichtung 18 besteht darin, die ausgewählten Anlagenkomponententypen 14 durch Anlagenkomponenten 22,23,24 zu ersetzen, so dass vom Anlagenkonzept 20 nicht nur prinzipiell die gewünschte Spezifikation der technischen Anlage erfüllbar, sondern auch konkret ausführbar ist, wobei beispielsweise die vom Anlagenkonzept 20 umfasste Anlagenkomponenten 22,23,24 bestellt und entsprechen der ebenfalls vom Anlagenkonzept 20 umfassten Verbindungen zwischen den Anlagenkomponenten 22,23,24 beschaltet werden.

Beim Anlagenkonzept 20 kann es sich beispielsweise um eine grafische Darstellung auf einem Computerbildschirm oder einem Ausdruck davon handeln, auf welchem die Anlagenkomponenten 22,23,24 sowie deren vorzunehmende Verschaltungen (Verbindungen) derart detailliert ersichtlich sind, dass es zu einer konkreten Ausführung der mittels des Anlagenkonzepts 20 beschriebenen technischen Anlage, welche die gewünschte Spezifikation erfüllt, keiner weiteren detaillierten Recherche bedarf, um die technische Anlage verwirklichen zu können.

Es ist auch möglich, dass die Selektionseinrichtung 18 einen oder mehrere Anlagenkomponententypen 14 durch eine Auswahl an Anlagenkomponenten 22,23,24 ersetzt, wobei jede von der Auswahl umfasste Anlagenkomponente die gewünschte Funktion des entsprechenden Anlagenkomponententyps 14 ausführen kann. Dies kann z.B. dann der Fall sein, wenn zur Erfüllung einer gewünschten Funktion der Spezifikation der technischen Anlage mehrere Computer geeignet sind, so dass die letztendliche Auswahl der konkreten Anlagenkomponente 22,23,24 beispielsweise dem Benutzer des Konfigurators 1 überlassen wird.

Alternativ kann in einem derartigen Fall mittels der Selektionseinrichtung ein Vorzugstyp einer Anlagenkomponente 22,23,24 vorgeschlagen oder sogar automatisch ausgewählt werden.

Bei den Anlagenkomponententypen 14 und bei den Anlagenkomponenten 22,23,24 kann es sich sowohl um Hardware- als auch um Softwarekomponenten handeln. So kann beispielsweise mittels der Klassifikationseinrichtung 10 aus den Spezifikationsdaten 5 eine Anlagenkonfiguration 16 erzeugt sein, welche als Anla-genkomponententypen 14 einen Computer und ein mit diesem Computer verbundenes Softwareprogramm umfasst.

Mittels der Selektionseinrichtung 18 werden dann die genannten Anlagenkomponententypen 14, also der Computer und das Softwareprogramm, ersetzt durch einen bestimmten Computer mit bestimmten Eigenschaften bzw. ein bestimmtes Softwareprogramm, beispielsweise ein Betriebssystem oder ein Anwendungsprogramm.

Die Selektionseinrichtung 18 kann z.B. mittels eines neuronalen Netzes realisiert sein.

Es ist ebenfalls denkbar, dass die von Anlagenkonzept 20 umfasste Information insbesondere zum automatisierten Laden von Softwareprogrammen in Computern verwendet wird, da vom Anlagenkonzept 20 sowohl der konkret zur Realisierung einer technischen Anlage verwendete Rechner als auch das konkret auf diesem Rechner eingesetzte Softwareprogramm umfasst sein kann, so dass ein automatisches Laden der genannten Software leicht realisierbar ist.

Ein erfindungsgemäßer Konfigurator kann vorteilhaft zur Erstellung von Angeboten für eine technische Anlage verwendet werden, insbesondere wenn die Anlagenkomponenten 22,23,24 Informationen bezüglich ihres jeweiligen Angebotspreises umfassen.

In einem derartigen Fall steht nach Ermittlung des Anlagenkonzepts 20 nicht nur eine konkret realisierbare technische Anlage zur Verfügung, sondern auch deren Angebotspreis.

## Patentansprüche

1. EDV-basiertes Verfahren zur Erstellung eines Anlagenkonzepts (20) aus einer Anzahl von Anlagenkomponenten (22,23,24),
**gekennzeichnet durch** folgende Schritte:
a) Eine gewünschte Spezifikation einer technischen Anlage wird mittels Spezifikationsdaten (5) erfasst,
b) aus einem gespeicherten Vorrat (12) an Anlagenkomponententypen (14) werden anhand der Spezifikationsdaten (5) mittels einer Klassifikationseinrichtung (10) diejenigen Anlagenkomponententypen (14) ausgewählt, welche zur Erfüllung der gewünschten Spezifikation der technischen Anlage benötigt werden,
c) die ausgewählten Anlagenkomponententypen (14) werden mittels der Klassifikationseinrichtung (10) derart zu einer Anlagenkonfiguration (16) verknüpft, so dass die Anlagenkonfiguration (16) die gewünschte Spezifikation der technischen Anlage prinzipiell zumindest im Wesentlichen erfüllt, und
d) aus der Anlagenkonfiguration (16) wird mittels einer Selektionseinrichtung (18) ein Anlagenkonzept (20) erstellt, wobei die Anlagenkomponententypen (14) **durch** Anlagenkomponenten (22,23,24) ersetzt werden, so dass das Anlagenkonzept (20) eine konkret ausführbare technische Anlage beschreibt.

2. Konfigurator (1) zur Erstellung eines Anlagenkonzepts (20) aus einer Anzahl von Anlagenkomponenten (22,23,24),
**gekennzeichnet durch**
- Mittel zur elektronischen Erfassung von Spezifikationsdaten (5) einer technischen Anlage, wobei die Spezifikationsdaten (5) eine gewünschte Spezifikation einer technischen Anlage beschreiben,
- eine Klassifikationseinrichtung (10), mittels welcher aus einem gespeicherten Vorrat (12) an Anlagenkomponententypen (14) anhand der Spezifikationsdaten diejenigen Anlagenkomponententypen (14) auswählbar sind, welche zur Erfüllung der gewünschten Spezifikation der technischen Anlage benötigt werden und mittels welcher die ausgewählten Anlagenkomponententypen (14) derart zu einer Anlagenkonfiguration (16) verknüpfbar sind, so dass die Anlagenkonfiguration (16) die gewünschte Spezifikation der technischen Anlage prinzipiell zumindest im Wesentlichen erfüllt, und
- eine Selektionseinrichtung (18), mittels welcher aus der Anlagenkonfiguration (16) ein Anlagenkonzept (20) erstellbar ist, wobei die Anlagenkomponententypen (14) **durch** Anlagenkomponenten (22,23,24) ersetzt werden, so dass das Anlagenkonzept (20) eine konkret ausführbare technische Anlage beschreibt.
